# EUROPEAN PATENT SPECIFICATION

(11) **EP 2 559 260 B1**
(45) Date of publication and mention of the grant of the patent: **13.09.2017**
(21) Application number: 11722546.6
(22) Date of filing: 15.04.2011
(51) Int. Cl.: H04Q 9/04, G01R 31/26, H01L 31/04, H04Q 9/00, H02S 50/10

(54) **DEVICE FOR MONITORING INFORMATION ASSOCIATED TO SOLAR PANELS OPERATION, SYSTEM COMPRISING THE DEVICE AND OPERATION METHOD THEREOF**
VORRICHTUNG ZUR ÜBERWACHUNG VON INFORMATIONEN IM ZUSAMMENHANG MIT DEM BETRIEB VON SOLARZELLEN, SYSTEM MIT DER VORRICHTUNG UND BETRIEBSVERFAHREN DAFÜR
DISPOSITIF PERMETTANT DE CONTRÔLER DES INFORMATIONS ASSOCIÉES AU FONCTIONNEMENT DE PANNEAUX SOLAIRES, SYSTÈME COMPORTANT LE DISPOSITIF ET PROCÉDÉ DE FONCTIONNEMENT DE CELUI-CI

(30) Priority: 16.04.2010 IT TO20100308
(43) Date of publication of application: 20.02.2013
(73) Proprietor: S.I.E.M. S.R.L., 73100 Lecce (IT)
(72) Inventor: AGUGLIA, Jorge Miguel, I-73100 Lecce (IT)
(74) Representative: Robba, Pierpaolo
(86) International application number: PCT/IB2011/051635
(87) International publication number: WO 2011/128875

(56) References cited:
- EP-A2- 1 630 762
- WO-A2-2008/125915
- JP-A- 2004 013 572
- US-B1- 6 298 054

## Description

### Field of the Art

The present invention generally refers to a device for monitoring information regarding the functioning of photovoltaic and/or hybrid (photovoltaic and thermal) solar panels and for the communication, by means of electrical connections, of such information to a central coordination unit.

The present invention also refers to the system which comprises the device and the central coordination unit and to the functioning method of the system.
In particular, the present invention refers to devices to be applied to photovoltaic and/or hybrid solar panels for monitoring the functioning thereof and for transmitting the monitored information to a central unit by means of the electrical power supply lines or connections.

### Prior Art

Devices and systems are known in the prior art for monitoring information regarding the functioning of solar panels or solar cells and for the communication of such information to a central unit via the electrical power supply lines.

For example, from the patent document WO_2008/125915_A, a system is known for monitoring solar panel functioning information.
The known system comprises devices associated with the panels or with the cells adapted to monitor and transmit functioning information or data via the lines with which the solar panels or cells provide electrical power.

In accordance with the prior art, the monitoring devices are configured to collect and store the information, and to transmit it at certain time intervals.

Such solution requires the use of monitoring devices that are particularly complex and leads to coordination problems in the collection of information, possible conflicts in the transmission of the information and problems controlling that all of the devices installed on the panels or on the cells are operative and functioning.

Generally, the Applicant observed that the prior art provides for the use of particularly complex monitoring devices and does not ensure control safety for the functioning of the solar panels, since it entrusts the information collection and the transmission to the single monitoring devices.

### Summary Description of the Invention

The object of the present invention is to solve the above-described problems of the prior art.
The device for monitoring information associated with the functioning of solar panels as claimed attains such object.

The present invention also regards a system comprising devices for monitoring information associated with the functioning of solar panels and a functioning method as claimed.

The description and the claims form part of the technical teaching provided herein with regard to the invention.

The following summary description of the invention is given for the purpose of providing a basic understanding of several aspects of the invention.
This summary description is not an extensive description and as such should not be intended as suitable for identifying key or critical elements of the invention, or suitable for delineating the object of the invention.
Its only purpose is to present several concepts of the invention in a simplified form, as an anticipation of the detailed description reported below.

In accordance with one characteristic of a preferred embodiment, the monitoring device for solar panels is connected with electrical connection poles of the panel and comprises a microprocessor circuit configured to monitor the functioning information of the solar panel and to activate the transmission of the information only upon receipt of a synchronization signal of predetermined duration, for example 3 milliseconds, received through the same electrical connection poles.

In accordance with a further characteristic of the present invention, the monitoring device is configured to transmit the information by short-circuiting the electrical connection poles of the solar panel in logical sequence.

In accordance with another characteristic of the present invention, the monitoring device is configured to supply electrical power to the microprocessor circuit, even during the transmission of the information.

### Summary Description of the Figures

These and other characteristics and advantages of the present invention will be clear from the following description of a preferred embodiment given as a nonlimiting example with the aid of the enclosed figures, in which elements indicated with a same or similar reference number indicate elements that have the same or similar functionality and structure, and in which:
Fig. 1 schematically represents a system for monitoring information associated with the functioning of solar panels;
Fig. 2 represents a summary block diagram of devices for panels to be used in the system of Fig. 1; and
Fig. 3 represents an example of an electric circuit which attains the block diagram of Fig. 2.

### Description of a Preferred Embodiment

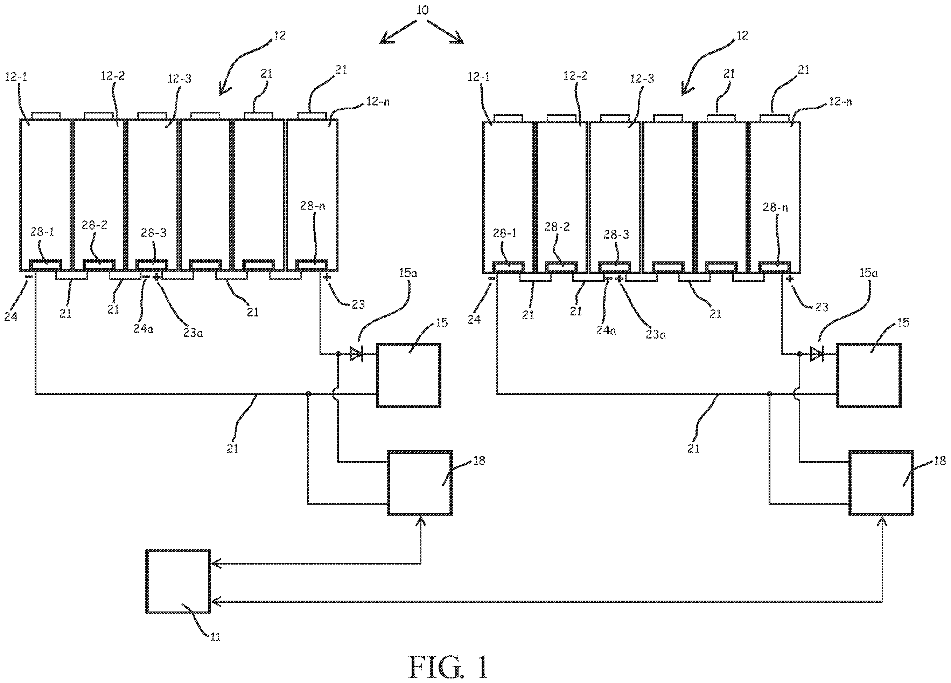

With reference to Fig. 1, a system 10 is illustrated for monitoring information associated with the functioning of solar panels, each preferably comprising a plurality of solar cells, for example 24 cells connected in series in series. Such system provides for a set of panels 12-1, 12-2, 12-3, ..., 12n connected in a known manner by means of electrical connections 21 so as to form a set 12 of solar panels adapted to generate, in output between an input pole (- pole) 24 and an output pole (+ pole) 23, a power supply voltage Vcc of the set 12, e.g. on the order of 800 V.
In accordance with the present embodiment, there can be one or more sets of panels 12 without departing from the scope of that described and claimed.
Therefore, in the present description, reference is preferably made to a single set 12, since the description of possible further sets would be identical to that taken for reference purposes, except for the possible presence of a station 11 for monitoring the overall system 10 comprising several sets of panels 12.
Naturally, in further embodiments, the monitoring station 11 can also be provided even if there is only one set of panels 12.

Conventionally, between the poles (respectively 23 and 24) of the set of solar panels 12, e.g. photovoltaic panels or panels that are both photovoltaic and thermal, also called hybrid panels, an inverter circuit 15 of known type is inserted, adapted to convert a direct voltage into an alternating voltage.
In parallel with the inverter 15, a coordination device 18 is provided, connected to the possible monitoring station 11 and decoupled from the inverter by means of a circuit 15a; the coordination device 18 is configured to transmit information requests to the various panels 12-1, 12-2, 12-3, ..., 12n of the set 12 by using the electrical connections 21.
The circuit 15a, e.g. a diode, is positioned between the coordination device 18 and the inverter circuit 15, and is adapted to decouple the coordination device 18 from the inverter 15 in a known manner.

Each panel 12-1, 12-2, 12-3, ..., 12n, in the preferred embodiment, comprises a respective electronic circuit or panel device 28-1, 28-2, 28-3, ..., 28-n (Fig. 1, Fig. 2, Fig. 3), preferably arranged between the positive pole 23a and the negative pole 24a of each panel, and adapted to reply to the requests transmitted by the coordination device or coordinator 18 by using the electrical connections 21 and a communication protocol.
In particular, in accordance with the present embodiment, the transmission from each panel device 28-1, 28-2, 28-3, ..., 28-n to the coordinator device 18 and vice versa occurs by short-circuiting, during transmission, the voltage between the poles 23a and 24a of the respective panels 12-1, 12-2, 12-3, ..., 12n or between the poles 23 and 24 of the set of panels 12.

In the preferred embodiment, the system 10 implements an architecture of "master-slave" type, in which the coordinator device 18, with "master" function, by transmitting opportune synchronization signals sets the communication of all the panel devices 28-1, 28-2, 28-3, ..., 28-n of the set 12 of the panels 12-1, 12-2, 12-3, ..., 12n which have "slave" function, as described hereinbelow in detail.

For example, the "master" 18 transmits information requests to all the panel devices 28-1, 28-2, 28-3, ..., 28-n, or "slaves". Such requests are cyclically transmitted by means of a synchronization signal with predetermined duration sufficiently brief so as to prevent a block of the inverter 15, e.g. autonomously or upon receipt of interrogations coming from the possible monitoring station 11.

Each panel device 28-1, 28-2, 28-3, ..., 28-n, or "slave", upon receipt of the request, packages its panel 12-1, 12-2, 12-3, ..., 12n information and sends it to the master 18 at different instants, calculated on the basis of an internal protocol, as will be described in detail below.

Such communication mode - in which it is provided that the "master" 18 launches the synchronization signal of brief duration to all the "slaves" 28-1, 28-2, 28-3, ..., 28-n and that these reply at different calculated instants with respect to each other and in a certain time period - allows avoiding conflicts and a large amount of short-circuits, when faced with the transmission of information from the various "slaves" to the "master".

The above-described transmission mode ensures that the inverter 15 continues to function without the risk of blocks, which are particularly due to repeated and coinciding power supply interruptions.

Indeed, as is known, the inverters 15 must operate within predefined voltage ranges and the fall of voltage below the predefined limits causes the block of the electrical power supply.

In accordance with the present embodiment, the communication protocol provides (see Table 1) that the information of every single panel device 28-1, 28-2, 28-3, ..., 28-n, is contained in a packet or "frame" comprising (for example) eight information or data fields in which each field is formed by one byte.
For example, the first field comprises the header of the packet; such field allows, for example, distinguishing one packet type from another.
The last field comprises, for example, a control code or checksum adapted to identify the integrity of the data contained inside the packet.
In particular, in the preferred embodiment, such field is the "sum module 256" of all the transmitted data fields.

In accordance with the present embodiment, the "master" or coordinator circuit 18 reads the data received in sequence from all the "slaves" upon receipt of the synchronization signal.

In the preferred embodiment, between the header and the checksum, the following fields are provided:
- Identification number of the circuit 28-1, 28-2, 28-3, ..., 28-n, associated with the panel (maximum 128 modules);
- Voltage of the panel;
- Current of the panel;
- Temperature of the panel;
- Pressure of a possible cooling fluid, e.g. in panels of hybrid type;
- Detected light intensity or illuminance of the panel.

**Table 1**

| Header | Ident. | Volt. | Curr. | Temp. | Press. | Illum. | Check |
|---|---|---|---|---|---|---|---|
| 1 Byte | 1 Byte | 1 Byte | 1 Byte | 1 Byte | 1 Byte | 1 Byte | 1 Byte |

Naturally, in accordance with other embodiments, there can be more or less fields with respect to those indicated, without departing from the described and claimed scope. The described protocol, of UART (Universal Asynchronous Receiver-Transmitter) type, allows the transmission of data in a sequential or serial manner at a constant speed through the electrical connections 21.
Indeed, since the transmission of the data from the panel devices 28-1, 28-2, 28-3, ..., 28-n occurs by short-circuiting the voltage at the poles of each panel one at a time, during transmission, it is important that each panel device:
- transmits the data at separate, non-overlapped instants, since otherwise data would be lost and the sum of the voltage drops (if greater than a certain limit) would cause the block of the inverter 15; and
- is capable of quickly restoring its normal functioning conditions in terms of voltage - current after each transmission.
In accordance with the present embodiment, the communication speed was verified at 4800 baud, i.e. at a speed where each information field (byte) is sent in a time period of about 2 ms for a total of 16 ms per packet.
Taking the speed of 4800 baud as reference, it is provided that, after the master 18 has sent the synchronization signal, i.e. of initial communication, all the panel devices 28-1, 28-2, 28-3, ... or 28-n, calculate a time period or delay period as a function of the respective identification number; after the calculated delay period, they send a reply with their packet or frame, comprising their identification number and all the information as in Table 1.
In the preferred embodiment, the calculation of the delay is obtained, for example, by means of multiplying the identification number of the circuit by a time constant or predetermined time base. This constant is the minimum time that a module requires to sent the packet or frame to the coordinator 15, e.g. 16 ms.
In the still more preferred embodiment, the delay time obtained is increased by a certain percentage, e.g. 2%, so as to compensate for internal tolerances of the panel devices.

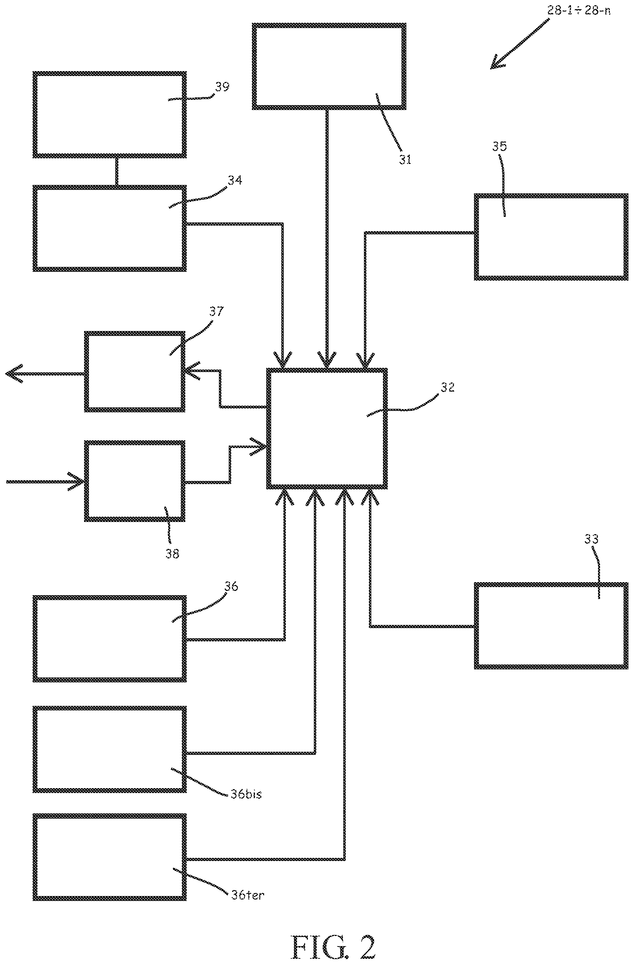

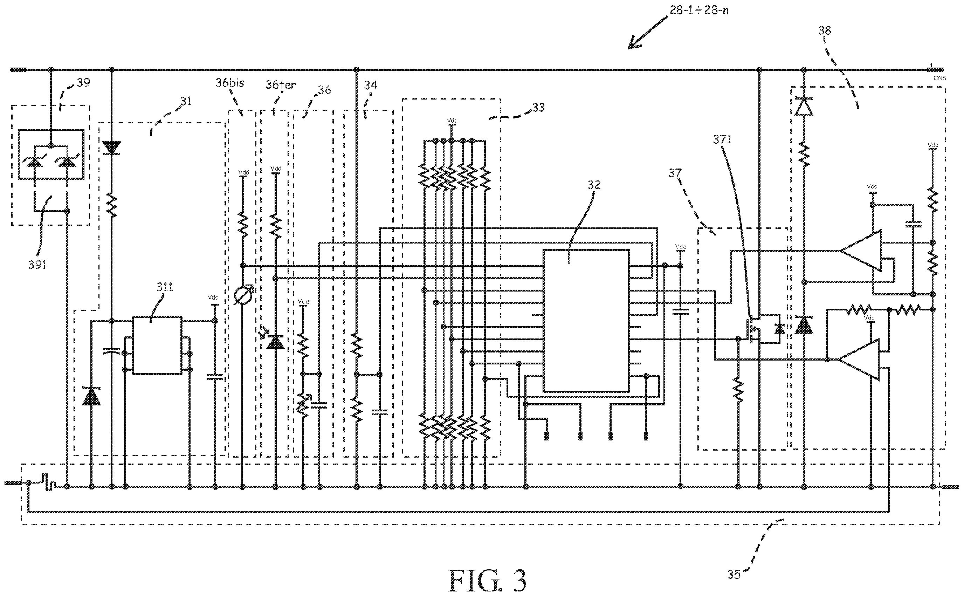

With reference to Fig. 2 and 3, the structure is now described of the devices 28-1, 28-2, 28-3, ..., 28-n, associated with the single panels 12-1, 12-2, 12-3, ..., 12n.

The panel devices 28-1, 28-2, 28-3, ..., 28-n all have substantially identical structure; for the purpose of implementing the communication protocol and mode described above, they comprise the following in the most general form:
- a microprocessor circuit (microcontroller) 32, in which the microcontroller 32, of known type, is programmed to control the functioning of the entire panel device;
- a voltage regulator circuit 31 configured to transform the voltage at the poles of the panel into a voltage suitable for powering the microcontroller 32;
- an identification circuit 33 connected to the microcontroller 32 and configured to allow the microcontroller 32 to identify the identification number of the panel to which it is associated;
- a circuit for reading the supply voltage 34 of the panel, a circuit for reading the current 35 which crosses the panel, a circuit for reading or measuring the temperature 36 of the panel, a circuit for reading the pressure 36bis and a circuit for reading the illuminance 36ter, connected to the microcontroller 32 and configured to allow the microcontroller 32 to read, and for example cyclically store in an internal memory, the values of supply voltage, current, temperature, pressure and illuminance of the panel;
- a transmitter circuit 37 and a receiver or detector circuit 38 connected to the microcontroller 32 and respectively adapted to transmit the data frame to the coordinator device 18 on the basis of the values read and/or stored in the internal memory of the microcontroller 32 and to acquire the synchronization signal transmitted by the coordinator device 18;
- a bypass circuit 39, preferably bypass diodes (which are known), arranged between the poles of the panel and adapted to prevent the problem known as "HOT SPOT", according to which the panel tends to absorb energy in case of lack of light.

An embodiment of the panel devices described above is reported below:

### 31 - Voltage regulator circuit

The voltage regulator preferably completes two tasks. One is to transform the input voltage supplied by the panel, which can for example vary from 6 to 25 Vcc, as a function of the number of cells present on the panel, into a constant voltage equal to 5 Vcc, adapted to provide electrical power to the microcontroller 32 and to the other circuits of the panel device.

The second task of the voltage regulator is to ensure the survival of the microcontroller 32 when the data frame is transmitted from the panel device 28-1, 28-2, 28-3, ... or 28-n to the coordinator device 18.

Indeed, in accordance with the present embodiment, when there is the transmission of a frame, the power supply of the panel 12-1, 12-2, 12-3, ... or 12-n is short-circuited as a function of the contents of the data frame and hence energy for supplying power to the microcontroller 32 comes to be missing, for part of the transmission time.

The first task is delegated, for example, to an electronic component of known type known as an LDO (Low-DropOut) regulator 311, e.g. a linear regulator with low consumption that has good performances even when the voltage to be regulated is very close to the regulated voltage.

The second task, instead, is delegated to a buffer electric circuit 312 formed by a diode and a large-capacity capacitor. The diode allows charging the capacitor from the voltage of the panel, but it prevents discharge when the power supply is shorted during data transmission.

The capacitor is the buffer battery of the circuit 312 and compensates for the lack of voltage during communication from the panel device to the coordinator device 18.

### 32 - Microprocessor circuit or microcontroller

The microcontroller is the brain of the device. It allows processing the data that arrives from the reading and measuring circuits, respectively 34, 35 and 36, 36bis and 36ter, connected thereto, and controlling the transmission of the data by means of the transmitter circuit 37. Preferably, the microcontroller 32 is also prearranged to cyclically store the data read by the reading circuits in an internal reading and writing memory.

The microcontroller 32 also comprises program modules configured to recognize a certain synchronization signal transmitted by the coordinator device 18, in order to organize the data read by the reading circuits 34, 35, 36, 36bis and 36ter or by the internal memory in accordance with the communication protocol and to activate the transmission thereof.

For example, the microcontroller 32 is a Cypress Semiconductor PSoC CY8C27243-PVX, which is a very versatile controller, with high calculation power and excellent performances that can be scaled on the basis of project requirements.

### 33 - Identification circuit

In the preferred embodiment, this circuit comprises a plurality of high-value resistors connected to specific terminals of the microcontroller and adapted to be short-circuited with jumpers (dip-switches) in parallel with the resistors, such that the insertion or non-insertion of the jumpers allows the microcontroller 32 to read a digital value equal to (logic) 1 or (logic) 0 at its terminals.

In the preferred embodiment, a jumper configuration is provided that is arranged for seven terminals of the microcontroller 32, so as to be able to provide a binary code that varies from 0 to 127 decimal and in the present embodiment corresponds with the maximum number of panels 12-1, 12-2, 12-3, ..., 12-n configurable in a set of panels 12. In summary, the identification circuit is adapted to represent the unique identification number of each panel in the set of panels (12).

### 34 - Circuit for reading the voltage

This circuit, for example, is a simple resistive divider calibrated for the voltage range admissible at the poles of the panel, e.g. 6 - 25 Vcc, and transforms the range into 0 - 5 Vcc voltage, such voltage compatible with the ADC (Analog Digital Converter) converter of the microcontroller 32.

### 35 - Circuit for reading the current

The supplied current is a derived electrical parameter, i.e. obtainable from the voltage reading on a resistor known as SHUNT.

The shunt resistance is a very small value, ranging around 5 milliohms; this is because the flow of high currents, e.g. 20 A, leads to the overheating of the same with possible breakage of the resistor.

Therefore, also the voltages to be read will be small; for example I=20 A; R =0.005 Ohm thus V=20*0.005= 0.1 Vcc. Such voltage, during the acquisition of the ADC of the microcontroller, causes resolution to be lost in the conversion. In order to remedy this, an operational amplifier is used which multiplies this voltage by a factor Ag called gain, for example comprised between 20 and 100.

### 36 - Circuit for reading the temperature

The temperature is acquired, for example, through the use of a NTC (Negative Temperature Coefficient), i.e. a resistor that can be varied as a function of the temperature; in the example, this is called negative since its value decreases with the increase of the temperature.

The temperature is read in the same manner as the power supply voltage, i.e. a resistive divider is made in which one of the resistors is that of the NTC. This ensures that with the variation of the temperature, the voltage varies between the two resistors, so that the value of the panel temperature can be determined.

### 36bis - Circuit for reading the pressure

The circuit for reading the pressure is attained, for example, by means of a simple calibrated resistive divider. One resistor is the pressure sensor that can vary between 0 - 10 Bar and between 10 - 400 Ohm and the other is a resistor calibrated on the resistive range as an expression of the pressure of the sensor.

Such divider transforms the voltage in output from the voltage regulator 31, e.g. 5 Volts, into a voltage that can be varied from 0 to 5 Volts and read by an Analog Digital Converter (ADC) of the microprocessor 32.

### 36ter - Circuit for reading the illuminance

This circuit is obtained by means of a sensor, called for example a pyranometer sensor, which transforms the light intensity into a variable resistance.

Such resistance operates in an equivalent manner to that described for the pressure reading circuit.37 -

### 37 - Transmitter circuit

The transmitter circuit is for example an electronic circuit that transforms one electrical quantity into another quantity that could be electrical or physical.

In the preferred embodiment, the transmitter circuit is made in the form of a converter adapted to convert the serial frame of UART type coming from the microcontroller and comprising square waves at 0 and 5 Vcc, into a voltage comprised between 0 and the voltage of the panel.

In the preferred embodiment, in order to attain the transmitter circuit, a power MOSFET 371 was used; this is a logic switch directly controllable by the microcontroller. Much more preferably, the MOSFET is connected in series with a fuse, e.g. of restorable type, such to prevent possible MOSFET failures.

### 38 - Detector circuit

The detector circuit, in accordance with the present embodiment, is set to acquire the synchronization signal transmitted by the coordinator device 18.

The circuit is attained, for example, by means of a digital comparator, which in a first input has half the supply voltage of the microcontroller 32 and in a second input the voltage at the poles of the panel.

If the synchronization signal arrives, and consequently the voltage of the panel is brought to 0, i.e. to logic zero, the comparator sends a corresponding signal to the microcontroller 32; once it has been verified that the signal duration is comprised within a predetermined range, the microcontroller 32 arranges the sending of the data read by the reading circuits.

### 39 - Bypass circuit

The bypass circuit has the known function of preventing the problem present in all photovoltaic modules known as "HOT SPOT"; it is attained, for example, by means of a pair of diodes 391.

The functioning of the system 10 described up to now proceeds as follows - upon receipt of a single synchronization signal of predetermined duration, transmitted by the master 18 to all the panels 12-1, 12-2, 12-3, ... or 12-n of a set of panels 12, the respective panel circuit 28-1, 28-2, 28-3, ... or 28-n having an identification number different from every other panel of the set:
- reading, from the memory of its microcontroller 32, the identification number, voltage, current, pressure, illuminance and temperature data read by the respective circuits, 34, 35, 36, 36bis, 36ter and stored in the microcontroller 32;
- arranging a frame as described in Table 1;
- calculating a respective delay in accordance with that already described with regard to the protocol; and
- transmitting the frame by using the transmission circuit 37.

In summary, the data to be transmitted is placed together inside the "frame" where there is the header (at the top), and, in particular, the identification number of the panel, e.g. a unique number which identifies the same nth panel.
This only occurs upon a call by the coordinator device (master) 18 which sends a single synchronization signal to all the panel devices or "slaves" which, upon receipt and acknowledgement of the synchronization signal, reply by sending the data in an autonomous and sequential manner. Once the data relative to the various panels of the set 12 has been collected and the integrity thereof verified, the coordinator device 18 sends, for example, a communication to the monitoring station 11 of the entire system 10 or simply displays the data on a display, for example of liquid crystal or LCD type, connected to the coordinator device 18.

Naturally, obvious modifications and/or variants are possible of the above description with regard to the size, shapes, components, circuit elements, connections and contacts, also with regard to the details of the circuitry, of the illustrated structure and the operating method without departing from the invention as specified in the following claims.

## Claims

1. A monitoring device configured to monitor information associated with the functioning of a solar panel (12-1, 12-2, 12-3, ..., 12-n) having electrical connections (21), the monitoring device (28-1, 28-2, 28-3,..., 28-n) comprising
- connection poles (23a, 24a) connectable to respective electrical connections (21) of said solar panel;
- reading means (34, 35, 36, 36bis, 36ter) adapted to read the information associated with the functioning of the panel (12-1, 12-2, 12-3, ..., 12-n), said information being selected at least from a group comprising:
- voltage of the panel;
- current of the panel;
- temperature of the panel;
- pressure;
- illuminance;
- a transmitter circuit (37) configured to transmit said information through said connection poles (23a, 24a) to a coordinator circuit (18) connected, in use, to said connection poles by means of said electrical connections (21) ;
- a micro-processor circuit (32) connected to the transmitter circuit (37) and configured to activate the transmitter circuit (37) to transmit said information to said coordinator circuit (18);
- an identification circuit (33) connected to the micro-processor circuit (32) and configured to represent a certain identification number of said monitoring device (28-1, 28-2, 28-3, ..., 28-n);
**characterised in that**
- said micro-processor circuit (32) is configured to activate said transmitter circuit (37), in reply to the acknowledgment of a synchronization signal, with a delay time determined as a function of the identification number; and **in that**
- said transmitter circuit (37) is configured to transmit said information by short-circuiting each other, in use, said connection poles (23a, 24a) and said respective electrical connections (21) of said solar panel, so as to set at zero its voltage.

2. Device according to claim 1, **characterized in that** said transmitter circuit comprises a logic switch connected to the micro-processor circuit (32) and directly controllable by said micro-processor circuit (32) to transmit said information by short-circuiting in logical sequence each other, in use, said connection poles (23a, 24a) and said respective electrical connections (21) of said solar panel, so as to set at zero its voltage.

3. Device according to any one of claims 1 to 2, **characterized in that** said micro-processor circuit (32) is configured to organize the information in packets or "frames" according to a serial type communication protocol, in which said packets comprise:
- at least the identification number of the monitoring device;
- at least said information.

4. Device according to any one of claims 1 to 3, **characterized in that** said delay time is determined by multiplying the identification number by a time period necessary for the transmission of the information.

5. Device according to claim 4, **characterized in that** said delay time is increased by a certain percentage.

6. A system for monitoring the functioning of solar panels (12-1, 12-2, 12-3, ..., 12-n), mutually connected through electrical connections (21) so as to form a set of solar panels (12), said system comprising
- connection poles (23, 24) connectable to said set of solar panels (12);
- at least one coordination device (18) connected to said connection poles (23, 24) of the set of solar panels;
- a plurality of monitoring devices (28-1, 28-2, 28-3,..., 28-n) as claimed in claims 1 to 5, each having a unique identification number and connected to respective solar panels of said set of solar panels (12).

7. A method for monitoring information associated with the functioning of solar panels (12-1, 12-2, 12-3, ..., 12-n) that are mutually connected so as to form a set of solar panels (12) in which each solar panel comprises respective connection poles (23a, 24a) and a respective monitoring device (28-1, 28-2, 28-3,..., 28-n) having a respective identification number, said set of panels (12) comprising a coordination device (18) connected to said panels by means of the connection poles of said set (23, 24), said method comprising the steps of
- transmitting, by means of said coordination device (18) and the connection poles of the set (23, 24), a synchronization signal to the monitoring devices (28-1, 28-2, 28-3,..., 28-n);
- reading, by means of said monitoring devices (28-1, 28-2, 28-3,..., 28-n), the information associated with the functioning of each panel (12-1, 12-2, 12-3, ..., 12-n), said information being selected at least from a group comprising:
- voltage of the panel;
- current of the panel;
- temperature of the panel;
- pressure;
- illuminance;
- transmitting, by means of said monitoring devices (28-1, 28-2, 28-3,..., 28-n) and said respective connection poles (23a, 24a) to said coordinator circuit (18), said information in reply to the acknowledgment of the synchronization signal with a delay time determined by each monitoring device (28-1, 28-2, 28-3,..., 28-n) as a function of the identification number;
said step of transmitting to the coordinator circuit (18) comprising the step of
- short-circuiting each other, in use, said respective connection poles (23a, 24a) so as to set at zero the voltage of the solar panel.

8. Method according to claim 7, **characterized in that** said step of short-circuiting further comprises the step of
- short-circuiting in logical sequence each other said respective connection poles (23a, 24a) so as to set at zero the voltage of the solar panel.

9. Method according to any one of claims 7 to 8, wherein said step of transmitting with a certain delay time comprises the step of multiplying the identification number of each panel by a time period necessary for the transmission of the information.

10. Method according to claim 9, wherein said step of multiplying also comprises a step in which said delay time is increased by a certain percentage.

11. A solar panel having at least one pair of electrical connections (21), **characterized in that** it comprises a monitoring device (28-1, 28-2, 28-3,..., 28-n) as claimed in claims 1 to 5, said device having a unique identification number and being connected to said electrical connections.

## Patentansprüche

1. Überwachungsvorrichtung, die konfiguriert ist, Informationen im Zusammenhang mit der Funktionalität eines Solarpaneels (12-1, 12-2, 12-3, ..., 12-n) mit elektrischen Verbindungen (21) zu überwachen, wobei die Überwachungsvorrichtung (28-1, 28-2, 28-3, ..., 28-n) umfasst
- Verbindungspole (23a, 24a), die mit jeweiligen elektrischen Verbindungen (21) des Solarpaneels verbindbar sind;
- Lesemittel (34, 35, 36, 36bis, 36ter), die angepasst sind, die Informationen im Zusammenhang mit der Funktionalität der Zelle (12-1, 12-2, 12-3, ..., 12-n) zu lesen, wobei die Informationen zumindest aus einer Gruppe ausgewählt sind, umfassend:
- Spannung des Paneels;
- Strom des Paneels;
- Temperatur des Paneels;
- Druck;
- Lichtintensität;
- einen Senderschaltkreis (37), der konfiguriert ist, die Informationen durch die Verbindungspole (23a, 24a) an einen Koordinationsschaltkreis (18) zu senden, der in Verwendung mittels der elektrischen Verbindungen (21) mit den Verbindungspolen verbunden ist;
- einen Mikroprozessorschaltkreis (32), der mit dem Senderschaltkreis (37) verbunden ist und konfiguriert ist, den Senderschaltkreis (37) zu aktivieren, um die Informationen an den Koordinationsschaltkreis (18) zu senden;
- einen Identifikationsschaltkreis (33), der mit dem Mikroprozessorschaltkreis (32) verbunden ist und konfiguriert ist, eine bestimmte Identifikationsnummer der Überwachungsvorrichtung (28-1, 28-2, 28-3, ..., 28-n) darzustellen;
**dadurch gekennzeichnet, dass**
- der Mikroprozessorschaltkreis (32) konfiguriert ist, den Senderschaltkreis (37) in Antwort auf die Bestätigung eines Synchronisationssignals mit einer Verzögerungszeit zu aktivieren, die als eine Funktion der Identifikationsnummer ermittelt wird;
und dadurch, dass
- der Senderschaltkreis (37) konfiguriert ist, in Verwendung die Informationen durch ein gegenseitiges Kurzschließen der Verbindungspole (23a, 24a) und der jeweiligen elektrischen Verbindungen (21) des Solarpaneels, um dessen Spannung auf null zu setzen, zu senden.

2. Vorrichtung nach Anspruch 1, **dadurch gekennzeichnet, dass** der Senderschaltkreis einen Verknüpfungsschalter umfasst, der mit dem Mikroprozessorschaltkreis (32) verbunden ist und direkt durch den Mikroprozessorschaltkreis (32) steuerbar ist, um in Verwendung die Informationen durch gegenseitiges Kurzschließen der Verbindungspole (23a, 24a) und der jeweiligen elektrischen Verbindungen (21) des Solarpaneels in logischer Reihenfolge, um seine Spannung auf null zu setzen, zu senden.

3. Vorrichtung nach einem der Ansprüche 1 bis 2, **dadurch gekennzeichnet, dass** der Mikroprozessorschaltkreis (32) konfiguriert ist, die Informationen in Paketen oder "Frames" gemäß einem Kommunikationsprotokoll eines seriellen Typs zu organisieren, in dem die Pakete umfassen:
- zumindest die Identifikationsnummer der Überwachungsvorrichtung;
- zumindest die Informationen.

4. Vorrichtung nach einem der Ansprüche 1 bis 3, **dadurch gekennzeichnet, dass** die Verzögerungszeit durch ein Multiplizieren der Identifikationsnummer mit einer Zeitperiode, die zum Senden der Informationen notwendig ist, ermittelt wird.

5. Vorrichtung nach Anspruch 4, **dadurch gekennzeichnet, dass** die Verzögerungszeit um einen bestimmten Prozentsatz erhöht ist.

6. System zum Überwachen der Funktionalität von Solarpaneelen (12-1, 12-2, 12-3, ..., 12-n), die miteinander durch elektrische Verbindungen (21) verbunden sind, um einen Satz von Solarpaneelen (12) zu bilden, das System umfassend
- Verbindungspole (23, 24), die mit dem Satz von Solarpaneelen (12) verbunden werden können;
- zumindest eine Koordinationsvorrichtung (18), die mit den Verbindungspolen (23, 24) des Satzes von Solarpaneelen verbunden ist;
- mehrere Überwachungsvorrichtungen (28-1, 28-2, 28-3, ..., 28-n) gemäß den Ansprüchen 1 bis 5, wobei jede eine einzigartige Identifikationsnummer hat und mit jeweiligen Solarpaneelen des Satzes von Solarpaneelen (12) verbunden ist.

7. Verfahren zum Überwachen von Informationen im Zusammenhang mit der Funktionalität von Solarpaneelen (12-1, 12-2, 12-3, ..., 12-n), die miteinander verbunden sind, um einen Satz von Solarpaneelen (12) zu bilden, in dem jedes Solarpaneel jeweilige Verbindungspole (23a, 24a) und eine jeweilige Überwachungsvorrichtung (28-1, 28-2, 28-3, ..., 28-n), die eine jeweilige Identifikationsnummer hat, umfasst, wobei der Satz von Paneelen (12) eine Koordinationsvorrichtung (18) umfasst, die mit den Zellen mittels der Verbindungspole des Satzes (23, 24) verbunden ist, das Verfahren umfassend die Schritte zum
- Senden, mittels der Koordinationsvorrichtung (18) und der Verbindungspole des Satzes (23, 24), eines Synchronisationssignals an die Überwachungsvorrichtungen (28-1, 28-2, 28-3, ..., 28-n);
- Lesen, mittels der Überwachungsvorrichtungen (28-1, 28-2, 28-3, ..., 28-n), der Informationen im Zusammenhang mit der Funktionalität jedes Paneels (12-1, 12-2, 12-3, ..., 12-n), wobei die Informationen zumindest aus einer Gruppe ausgewählt sind, umfassend:
- Spannung des Paneels;
- Strom des Paneels;
- Temperatur des Paneels;
- Druck;
- Lichtintensität;
- Senden, mittels der Überwachungsvorrichtungen (28-1, 28-2, 28-3, ..., 28-n) und der jeweiligen Verbindungspole (23a, 24a), der Informationen an den Koordinationsschaltkreis (18) in Antwort auf die Bestätigung des Synchronisationssignals, mit einer Verzögerungszeit, die durch jede Überwachungsvorrichtung (28-1, 28-2, 28-3, ..., 28-n) als eine Funktion der Identifikationsnummer ermittelt wird;
der Schritt zum Senden an den Koordinationsschaltkreis (18) umfassend den Schritt zum
- gegenseitigen Kurzschließen, in Verwendung, der jeweiligen Verbindungspole (23a, 24a), um die Spannung des Solarpaneels auf null zu setzen.

8. Verfahren nach Anspruch 7, **dadurch gekennzeichnet, dass** der Schritt des Kurzschließens ferner den Schritt umfasst zum
- gegenseitiges Kurzschließen der jeweiligen Verbindungspole (23a, 24a) in logischer Reihenfolge, um die Spannung des Solarpaneels auf null zu setzen.

9. Verfahren nach einem der Ansprüche 7 bis 8, wobei der Schritt zum Senden mit einer bestimmten Verzögerungszeit den Schritt Multiplizieren der Identifikationsnummer jedes Paneels mit einer Zeitperiode, die zum Senden der Informationen benötigt wird, umfasst.

10. Verfahren nach Anspruch 9, wobei der Schritt des Multiplizierens auch einen Schritt umfasst, in dem die Verzögerungszeit um einen bestimmten Prozentsatz erhöht ist.

11. Solarpaneel mit zumindest einem Paar von elektrischen Verbindungen (21), **dadurch gekennzeichnet, dass** es eine Überwachungsvorrichtung (28-1, 28-2, 28-3, ..., 28-n) gemäß der Ansprüche 1 bis 5 umfasst, wobei die Vorrichtung eine einzigartige Identifikationsnummer hat und mit den elektrischen Verbindungen verbunden ist.

## Revendications

1. Dispositif de surveillance configuré pour surveiller des informations associées au fonctionnement d'un panneau solaire (12-1, 12-2, 12-3, ..., 12-n) ayant des connexions électriques (21), le dispositif de surveillance (28-1, 28-2, 28-3, ..., 28-n) comprenant
- des pôles de connexion (23a, 24a) pouvant être connectés à des connexions électriques (21) respectives dudit panneau solaire ;
- des moyens de lecture (34, 35, 36, 36bis, 36ter) conçus pour lire les informations associées au fonctionnement du panneau (12-1, 12-2, 12-3, ..., 12-n), lesdites informations étant sélectionnées au moins à partir d'un groupe comprenant :
- une tension du panneau ;
- un courant du panneau ;
- une température du panneau ;
- une pression ;
- un éclairement ;
- un circuit d'émetteur (37) configuré pour émettre lesdites informations par l'intermédiaire desdits pôles de connexion (23a, 24a) à un circuit de coordinateur (18) connecté, en utilisation, auxdits pôles de connexion au moyen desdites connexions électriques (21) ;
- un circuit de micro-processeur (32) connecté au circuit d'émetteur (37) et configuré pour activer le circuit d'émetteur (37) pour émettre lesdites informations audit circuit de coordinateur (18) ;
- un circuit d'identification (33) connecté au circuit de micro-processeur (32) et configuré pour représenter un certain numéro d'identification dudit dispositif de surveillance (28-1, 28-2, 28-3, ..., 28-n) ;
**caractérisé par le fait que**
- ledit circuit de micro-processeur (32) est configuré pour activer ledit circuit d'émetteur (37), en réponse à l'acquittement d'un signal de synchronisation, avec un temps de retard déterminé en fonction du numéro d'identification ;
et **par le fait que**
- ledit circuit d'émetteur (37) est configuré pour émettre lesdites informations en court-circuitant les uns avec les autres, en utilisation, lesdits pôles de connexion (23a, 24a) et lesdites connexions électriques (21) respectives dudit panneau solaire, afin de régler à zéro sa tension.

2. Dispositif selon la revendication 1, **caractérisé par le fait que** ledit circuit d'émetteur comprend un commutateur logique connecté au circuit de micro-processeur (32) et pouvant être directement commandé par ledit circuit de micro-processeur (32) pour émettre lesdites informations en court-circuitant en séquence logique les uns avec les autres, en utilisation, lesdits pôles de connexion (23a, 24a) et lesdites connexions électriques (21) respectives dudit panneau solaire, afin de régler à zéro sa tension.

3. Dispositif selon l'une quelconque des revendications 1 à 2, **caractérisé par le fait que** ledit circuit de micro-processeur (32) est configuré pour organiser les informations en paquets ou « trames » selon un protocole de communication de type série, dans lequel lesdits paquets comprennent :
- au moins le numéro d'identification du dispositif de surveillance ;
- au moins lesdites informations.

4. Dispositif selon l'une quelconque des revendications 1 à 3, **caractérisé par le fait que** ledit temps de retard est déterminé par multiplication du numéro d'identification par une période de temps nécessaire pour l'émission des informations.

5. Dispositif selon la revendication 4, **caractérisé par le fait que** ledit temps de retard est augmenté d'un certain pourcentage.

6. Système pour surveiller le fonctionnement de panneaux solaires (12-1, 12-2, 12-3, ..., 12-n), mutuellement connectés par l'intermédiaire de connexions électriques (21) afin de former un ensemble de panneaux solaires (12), ledit système comprenant
- des pôles de connexion (23, 24) pouvant être connectés audit ensemble de panneaux solaire (12) ;
- au moins un dispositif de coordination (18) connecté auxdits pôles de connexion (23, 24) de l'ensemble de panneaux solaires ;
- une pluralité de dispositifs de surveillance (28-1, 28-2, 28-3, ..., 28-n) tels que revendiqués aux revendications 1 à 5, chacun ayant un numéro d'identification unique et étant connecté à des panneaux solaires respectifs dudit ensemble de panneaux solaires (12).

7. Procédé pour surveiller des informations associées au fonctionnement de panneaux solaires (12-1, 12-2, 12-3, ..., 12-n) qui sont mutuellement connectés afin de former un ensemble de panneaux solaires (12) dans lequel chaque panneau solaire comprend des pôles de connexion (23a, 24a) respectifs et un dispositif de surveillance (28-1, 28-2, 28-3, ..., 28-n) respectif ayant un numéro d'identification respectif, ledit ensemble de panneaux (12) comprenant un dispositif de coordination (18) connecté auxdits panneaux au moyen des pôles de connexion dudit ensemble (23, 24), ledit procédé comprenant les étapes consistant à
- émettre, au moyen dudit dispositif de coordination (18) et des pôles de connexion de l'ensemble (23, 24), un signal de synchronisation aux dispositifs de surveillance (28-1, 28-2, 28-3, ..., 28-n) ;
- lire, au moyen desdits dispositifs de surveillance (28-1, 28-2, 28-3, ..., 28-n), les informations associées au fonctionnement de chaque panneau (12-1, 12-2, 12-3, ..., 12-n), lesdites informations étant sélectionnées au moins à partir d'un groupe comprenant :
- une tension du panneau ;
- un courant du panneau ;
- une température du panneau ;
- une pression ;
- un éclairement ;
- émettre, au moyen desdits dispositifs de surveillance (28-1, 28-2, 28-3, ..., 28-n) et desdits pôles de connexion (23a, 24a) respectifs audit circuit de coordinateur (18), lesdites informations en réponse à l'acquittement du signal de synchronisation avec un temps de retard déterminé par chaque dispositif de surveillance (28-1, 28-2, 28-3, ..., 28-n) en fonction du numéro d'identification ;
ladite étape consistant à émettre au circuit de coordinateur (18) comprenant l'étape consistant à
- court-circuiter les uns avec les autres, en utilisation, lesdits pôles de connexion (23a, 24a) respectifs afin de régler à zéro la tension du panneau solaire.

8. Procédé selon la revendication 7, **caractérisé par le fait que** ladite étape consistant à court-circuiter comprend en outre l'étape consistant à
- court-circuiter en séquence logique les uns avec les autres lesdits pôles de connexion (23a, 24a) respectifs afin de régler à zéro la tension du panneau solaire.

9. Procédé selon l'une quelconque des revendications 7 à 8, dans lequel ladite étape consistant à émettre avec un certain temps de retard comprend l'étape consistant à multiplier le numéro d'identification de chaque panneau par une période de temps nécessaire pour l'émission des informations.

10. Procédé selon la revendication 9, dans lequel ladite étape consistant à multiplier comprend également une étape dans laquelle ledit temps de retard est augmenté d'un certain pourcentage.

11. Panneau solaire ayant au moins une paire de connexions électriques (21), **caractérisé par le fait qu'**il comprend un dispositif de surveillance (28-1, 28-2, 28-3, ..., 28-n) tel que revendiqué aux revendications 1 à 5, ledit dispositif ayant un numéro d'identification unique et étant connecté auxdites connexions électriques.
